# EUROPEAN PATENT SPECIFICATION

(11) **EP 1 591 228 B1**
(45) Date of publication and mention of the grant of the patent: **18.07.2007**
(21) Application number: 05252692.8
(22) Date of filing: 29.04.2005
(51) Int. Cl.: B29C 69/02, B29C 44/46, B29C 47/90

(54) **A method of manufacturing biodegradable packaging material and apparatus therefor**
Verfahren und Vorrichtung zur Herstellung eines biologisch abbaubaren Verpackungsmaterials
Procédé et appareil de préparation d'une matière d'emballage biodégradable

(30) Priority: 30.04.2004 GB 0409714
(43) Date of publication of application: 02.11.2005
(73) Proprietor: Green Light Products Ltd., London NW10 7XF (GB)
(72) Inventor: Song, Jim Centre for Biodegradable Materials Res., Uxbridge, Middlesex, UB8 3PH (GB); Kang, Yong Gang Ctre for Biodegrad. Materials Res., Uxbridge, Middlesex, UB8 3PH (GB); Tarverdi, Karnik Wolfson Centre for Materials, Uxbridge, Middlesex, UB8 3PH (GB); Yeo, Bruce, Park Royal London NW10 7XF (GB)
(74) Representative: Marlow, Nicholas Simon

(56) References cited:
- WO-A-01/39954
- WO-A-98/31523
- CH-A5- 679 564
- DE-A1- 2 707 516
- DE-A1- 2 758 632
- GB-A- 2 352 230
- US-A- 3 720 572
- US-A- 4 755 408

## Description

The invention relates to a method of manufacturing a biodegradable packaging material from foamed starch rods, and to apparatus therefor.

The manufacture of a biodegradable packaging material comprising an ordered structure of lengths of foamed starch rod is disclosed in GB-A-2 352 230. This document discloses the adhesion bonding of lengths of foamed starch rods formed by high temperature short time (HTST) extrusion cooking to produce blocks or planks. Water or another adhesive is applied to the surface of each length of rod before the lengths are arranged into an ordered structure. When the adhesive is water, reinforcement ribs of denser material are formed along the regions of contact between adjacent lengths of rod. The properties of the planks or blocks formed depend on the extent, spatial distribution, and thickness of the reinforcement ribs.

DE-A-27 58 632 discloses the manufacture of a moulded thermoplastic resin body having a wood grain pattern on its surface. An expandable resin is extruded through a nozzle having a lumber of apertures. The thus formed strands are heated to above the melting point of the resin and brought into contact with each other to melt them together to form a combined mass. Extrusion and a following altering of the cross-sections of single formed biodegradable rods is shown in WO 9 831 523 and CH 679 564.

It has now been found that by subjecting lengths of extruded foamed starch rod to a thermal forming process prior to adhesion bonding it is possible to modify their surface finish, dimensional stability and cross sectional geometry.

According to a first aspect of the present invention there is provided a method for making a biodegradable material for packaging comprising:
(a) forming a foamed starch rod (28) by extrusion; and
(b) bonding an extruded rod (28) to at least one other such rod (28), characterised by
(c) prior to the bonding step, passing the extruded rod (28) through a heated die (6) to alter the cross-section of the rod (28).

Preferably, the method comprises forming a plurality of foamed starch rods by extrusion, passing the rods through a heated die to alter the cross-section of the rods and bonding a rod which has passed through the heated die to at least one other such rod.

A foamed starch rod comprises starch and, optionally, additives such as plasticisers, for example poly vinyl alcohol, or nucleating agents, for example talc or bran.

The starch may be unmodified starch. A currently preferred starch source for the preparation of foamed starch rods is wheat flour containing around 9% protein.

Preferably, a bonding agent is applied to at least one surface of the rod. Preferably, the bonding agent is a liquid, more preferably water. Preferably, the bonding agent is applied using a jet spray system, a porous media using capillary suction, an ink jet printing system or one or more rollers.

Preferably, the die is heated to a temperature of between 80°C and 350°C. The temperature employed in any given case will depend upon the rate at which the rods are passed through the die. If the rods are passed through the die at high speed, a high temperature will be required; however, if the rods are passed through the die at low speed a lower temperature may be employed.

Preferably, the rods are passed through the heated die at a speed of 10ms⁻¹ or less, more preferably 6ms⁻¹. For a given die temperature, to increase the rate at which rods may be passed through the die the length of the die may be extended to increase the contact time between the rods and the die.

According to a second aspect of the present invention there is provided apparatus for making a biodegradable material for packaging comprising:
an extruder for forming a foamed starch rod (28); and
means (12) downstream of the extruder for bonding a rod (28) to another rod (28), the said bonding means including an applicator (10) for applying a bonding agent to at least one surface of the said rods (10), characterised in that the apparatus further comprises:
a heated die (6) upstream of the said bonding means for altering the cross-section of the rod (28); and
means (2,4) for feeding the rod through the die.

Preferably, the extruder forms a plurality of foamed starch rods (28) which are fed through the die (6).

preferably, the applicator is a jet spray system, a porous media using capillary suction, an ink jet printing system or one or more rollers.

The rods may be bonded to one another to form a flat array of rods which may be hot rolled into patterned panels or sheets and/or stacked with one or more other flat arrays to form multi-layer blocks. Preferably the rods are bonded together into a flat array which is cut into planks.

Preferably, the principal axes of the lengths of rod of a flat array are generally in axial alignment.

In multi-layer blocks, the principal axes of the lengths of rod of one layer may not be in axial alignment with the principal axes of the lengths of rod of an adjacent layer or layers. The principal axes of the lengths of rod of each layer may be generally transverse to those of the adjacent layer or layers.

The invention will now be described in more detail, by way of example only, with reference to the accompanying drawings, in which:
Figure 1 is a diagrammatic plan view of apparatus for making a biodegradable packaging material according to the invention; and
Figure 2 is a diagrammatic cross-section along the line II-II of Figure 1.

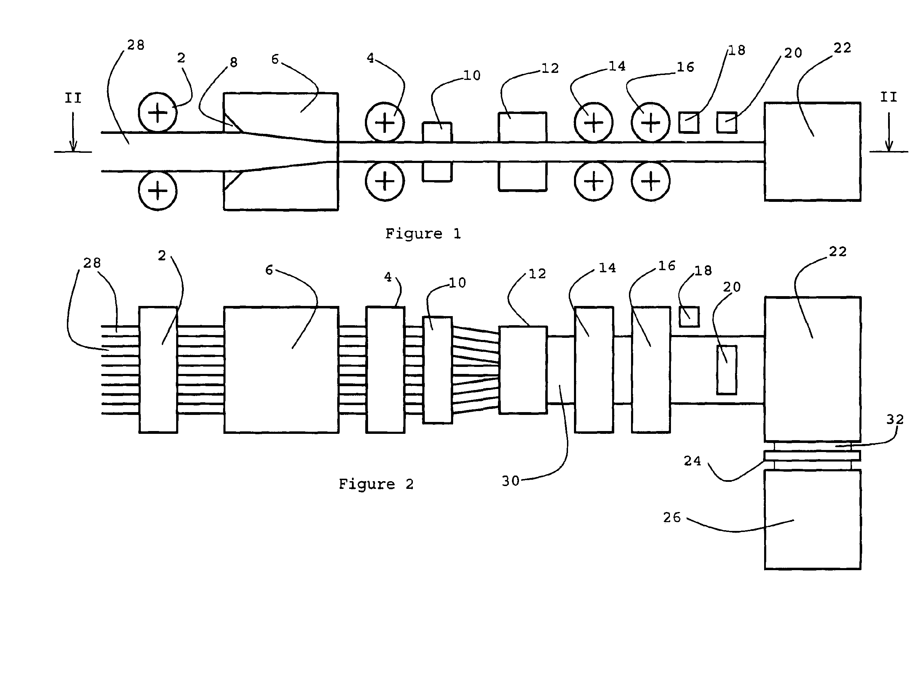

The apparatus shown diagrammatically in Figures 1 and 2 comprises a first pair 2 of powered feeding rollers and a second pair 4 of powered feeding rollers disposed either side of a die 6 having a plurality of channels 8. A first bonding agent application system 10 is disposed downstream of the second pair 4 of feeding rollers, and upstream of a packing unit 12 and a third pair 14 of powered feeding rollers. A pair of powered, heated patterning rollers 16 are optionally mounted downstream of the third pair 14 of powered feeding rollers.

For the production of multi-layer blocks, a second bonding agent application system 18 is disposed adjacent to a cutter 20, downstream of the third pair 14 of powered feeding rollers and, if present, the pair of powered patterning rollers 16. A joining unit 22, third bonding agent application system 24 and a stacking unit 26 are mounted downstream of the cutter 20.

In use, a plurality of continuous foamed starch rods 28 formed by conventional HTST extrusion are guided by the first 2 and second 4 pairs of powered feeding rollers at a speed of up to 10ms⁻¹ through the die 6, which is heated to a temperature of between 80°C and 350°C. The rods 28 are then pulled by the third pair 14 of powered feeding rollers past the first bonding agent application system 10 and the packing unit 12. As the rods 28 pass through the first bonding agent application system 10, a bonding agent is applied to their surfaces. The rods 28 are drawn through a channel in the packing unit 12 the width of which tapers in the direction of movement of the rods. As the rods pass through the channel they are compressed together so that they bond to one another to form a flat array 30 of rods. When included, the powered, patterning rollers 16 are heated to a temperature of between 80°C and 350°C, depending upon the rate at which the rods are fed past the rollers, and hot roll or pattern the array 30.

To form multi-layer blocks, the array 30 is pulled by the third pair 14 of powered feeding rollers past the second bonding agent application system 18 and the cutter 20 to the joining unit 22. As the array 30 passes the second bonding agent application system 18, a second bonding agent is applied to the sides of it. The array 30 is then cut to a desired length by the cutter 20 and forwarded to the joining unit 22 where it is bonded to one or more like arrays to form a plank 32 of desired width. A travelling mechanism is used to ensure that the cutter 20 travels along at the same speed as the array 26 and cuts across the array 30 to form a cut edge which is perpendicular to the direction of the rods 28 making up the array 30. The plank 32 having the desired length and width is then pulled past the third bonding agent application system 24 to the stacking unit 26 where it is stacked with one or more like planks to form a multi-layer block. As the plank passes the third bonding agent application system 24, a third bonding agent is applied to the top surface of the plank 32. The stacking unit 26 applies pressure to the top surface of the plank and allows for the horizontal rotation of the plank so that the orientation of the rods 28 making up the planks 32 which form the multi-layer block can be varied relative to one another.

The first 2, second 4 and third 14 pairs of feeding rollers and the optional pair of patterning rollers 16 are powered so that their rotation speeds may be adjusted and synchronised. The rollers are also made in halves so that they may be removed and replaced without disassembling the shafts and the machine framework, thereby allowing the nip between each pair of rollers to be easily adjusted. The surface of each of the three pairs of feeding rollers is coated with material such as rubber for effective gripping of the foam.

The pair of powered heated patterning rollers 16 may be used to shape the plank 26 and/or to apply a pattern, such as a manufacturer's logo or description of the goods to be packaged, to its surface.

The die 4 is insulated to reduce heat loss and the entrances of the channels 8 are funnel-shaped to avoid blockage of the entrances by the foamed starch. Preferably, the die channels are formed by inserts which may be removed and replaced without disassembling the machine framework.

The bonding agent applied by the first, second and third bonding agent application systems may be solid or liquid and may be the same or different. Liquid bonding agents are preferred for ease of handling and control. If the bonding agents are liquid, they may be aqueous or nonaqueous; the preferred bonding agent is water. The quantity of bonding agent applied to a given area is controlled by a regulating mechanism in each of the adhesion application systems. Known application apparatus may be employed to apply the bonding agents to the surface of the rods. Preferably, to ensure uniform and accurate distribution of the bonding agents, the bonding agent application systems are jet spray systems, porous media using capillary suction or ink jet printing systems. Where a jet spray system is used it is regulated by air pressure and pressure in the bonding agent. Where a porous medium is used it is regulated by the selection of the medium type, its thickness and contact area with the rods. Where an ink jet printing system is used it is regulated by the printing pattern and voltage on the firing signals.

While in the foregoing example the foamed starch rods are bonded to one another through application of a bonding agent to the surface of the rods, it will be appreciated that rods produced by the apparatus and method of the present invention need not be bonded to one another or could be bonded to one another in other ways, for example using tape.

From the foregoing example it will be appreciated that methods according to the invention can be used to modify the foam density of the starch rods to increase their resiliency to static loading and impact.

Furthermore, it will also be appreciated that the invention enables rods having desired dimensions and shape to be produced which have improved surface finish over rods formed using known extrusion foaming processes, thereby facilitating the application of bonding agent to the rods and the subsequent arrangement of the rods into an ordered structure.

## Claims

1. A method for making a biodegradable material for packaging comprising:
(a) forming a foamed starch rod (28) by extrusion; and
(b) bonding an extruded rod (28) to at least one other such rod (28), **characterised by**
(c) prior to the bonding step, passing the extruded rod (28) through a heated die (6) to alter the cross-section of the rod (28).

2. A method according to claim 1 further comprising applying a bonding agent to at least one surface of the said rod (28) prior to step (b).

3. A method according to claim 2 wherein the bonding agent is a liquid.

4. A method according to claim 2 or 3 wherein the bonding agent is water.

5. A method according to claim 2, 3 or 4 wherein the bonding agent is applied using a jet spray system, a porous media using capillary suction, an ink jet printing system or one or more rollers.

6. A method according to any preceding claim in which the shape of the cross-section of the rod (28) is altered in step (c).

7. A method according to any preceding claim in which the surface of the rod (28) is altered in step (c).

8. A method according to any preceding claim comprising:
(a) forming a plurality of foamed starch rods (28) by extrusion;
(b) bonding an extruded rod (28) to at least one other such rod (28), and
(c) prior to the bonding step, passing the extruded rods through a heated die (6) to alter the cross-section of the rods (28).

9. A method according to preceding claim wherein in step (b) a plurality of rods (28) are bonded to one another to form a flat array (30).

10. A method according to claim 9 further comprising shaping and/or applying a pattern to the surface of the array (30).

11. A method according to claim 10 wherein the array (30) is shaped and/or the pattern is applied using a heated roller (16).

12. A method according to claim 9, 10 or 11 further comprising:
(d) cutting arrays (30) of rods to form planks (32);
(e) bonding at least two planks together to form a multi-layer block.

13. A method according to claim 12 further comprising applying a bonding agent to at least one surface of the said planks prior to step (e).

14. A method according to claim 12 or 13 in which step (d) comprises bonding two or more cut arrays (30) to form the plank (32).

15. A method according to claim 14 further comprising applying a bonding agent to at least one surface of the cut arrays (30) prior to forming the plank (32).

16. A method according to any preceding claim wherein the die (6) is heated to a temperature of between 80°C and 350°C.

17. A method according to any preceding claim wherein the or each rod (28) is passed through the die (6) at a speed of 10ms⁻¹ or less.

18. A method according to any preceding claim wherein the or each rod (28) is passed through the die (6) at a speed of 6ms⁻¹ or less.

19. Apparatus for making a biodegradable material for packaging comprising:
an extruder for forming a foamed starch rod (28); and
means (12) downstream of the extruder for bonding a rod (28) to another rod (28), the said bonding means including an applicator (10) for applying a bonding agent to at least one surface of the said rods (10),
**characterised in that** the apparatus further comprises:
a heated die (6) upstream of the said bonding means for altering the cross-section of the rod (28); and
means (2,4) for feeding the rod through the die (6).

20. Apparatus according to claim 19 comprising:
at least one extruder for forming a plurality of foamed starch rods (28);
means (12) downstream of the extruder for bonding a rod (28) to another rod (28), the said bonding means including an applicator (10) for applying a bonding agent to at least one surface of the said rods (10) ;
a heated die (6) upstream of the said bonding means for modifying the rods (28); and
means for feeding the plurality of rods (28) through the die (6).

21. Apparatus according to claim 19 or 20 wherein the applicator (10) comprises a jet spray system, a porous media using capillary suction, an ink jet printing system or one or more rollers.

22. Apparatus according to any of claims 19, 20 or 21 further comprising a stacking unit (26) for laminating layers of bonded rods (28) to one another to form a multi-layer product.

## Patentansprüche

1. Verfahren zur Herstellung eines biologisch abbaubaren Verpackungsmaterials, das die folgenden Schritte beinhaltet:
(a) Formen eines aufgeschäumten Stärkestabs (28) durch Strangpressen; und
(b) Binden eines stranggepressten Stabs (28) an wenigstens einen anderen solchen Stab (28), **gekennzeichnet durch**
(c) Leiten des stranggepressten Stabs (28) vor dem Bindeschritt **durch** eine erhitzte Düse (6) zum Verändern des Querschnitts des Stabs (28).

2. Verfahren nach Anspruch 1, das ferner das Aufbringen eines Bindemittels auf wenigstens eine Oberfläche des genannten Stabs (28) vor Schritt (b) beinhaltet.

3. Verfahren nach Anspruch 2, wobei das Bindemittel eine Flüssigkeit ist.

4. Verfahren nach Anspruch 2 oder 3, wobei das Bindemittel Wasser ist.

5. Verfahren nach Anspruch 2, 3 oder 4, wobei das Bindemittel mit einem Sprühdüsensystem, einem porösen Medium unter Nutzung von Kapillarsaugwirkung, einem Tintenstrahldrucksystem oder einer oder mehreren Rollen aufgebracht wird.

6. Verfahren nach einem der vorherigen Ansprüche, wobei die Querschnittsgestalt des Stabs (28) im Schritt (c) verändert wird.

7. Verfahren nach einem der vorherigen Ansprüche, wobei die Oberfläche des Stabs (28) in Schritt (c) verändert wird.

8. Verfahren nach einem der vorherigen Ansprüche, das die folgenden Schritte beinhaltet:
(a) Bilden einer Mehrzahl aufgeschäumter Stärkestäbe (28) durch Strangpressen;
(b) Binden eines stranggepressten Stabs (28) an wenigstens einen anderen solchen Stab (28) und
(c) Leiten der stranggepressten Stäbe vor dem Bindeschritt durch eine erhitzte Düse (6) zum Verändern des Querschnitts der Stäbe (28).

9. Verfahren nach einem der vorherigen Ansprüche, wobei in Schritt (b) eine Mehrzahl von Stäben (28) aneinander gebunden wird, um eine flache Anordnung (30) zu bilden.

10. Verfahren nach Anspruch 9, das ferner das Formen und/oder Aufbringen eines Musters auf der/die Oberfläche der Anordnung (30) beinhaltet.

11. Verfahren nach Anspruch 10, wobei die Anordnung (30) geformt und/oder das Muster aufgebracht wird mittels einer erhitzten Rolle (16).

12. Verfahren nach Anspruch 9, 10 oder 11, das ferner die folgenden Schritte beinhaltet:
(d) Zerschneiden von Anordnungen (30) von Stäben, um Dielen (32) zu bilden;
(e) Verbinden von wenigstens zwei Dielen miteinander, um einen mehrlagigen Block zu bilden.

13. Verfahren nach Anspruch 12, das ferner das Aufbringen eines Bindemittels auf wenigstens eine Oberfläche der genannten Dielen vor Schritt (e) beinhaltet.

14. Verfahren nach Anspruch 12 oder 13, wobei Schritt (d) das Verbinden von zwei oder mehreren zerschnittenen Anordnungen (30) umfasst, um Dielen (32) zu bilden.

15. Verfahren nach Anspruch 14, das ferner das Aufbringen eines Bindemittels auf wenigstens eine Oberfläche der zerschnittenen Anordnungen (30) vor dem Bilden der Dielen (32) umfasst.

16. Verfahren nach einem der vorherigen Ansprüche, wobei die Düse (6) auf eine Temperatur zwischen 80°C und 350°C erhitzt wird.

17. Verfahren nach einem der vorherigen Ansprüche, wobei der oder jeder Stab (28) mit einer Geschwindigkeit von 10 ms⁻¹ oder weniger durch die Düse (6) geführt wird.

18. Verfahren nach einem der vorherigen Ansprüche, wobei der oder jeder Stab (28) mit einer Geschwindigkeit von 6 ms⁻¹ oder weniger durch die Düse (6) geführt wird.

19. Vorrichtung zur Herstellung eines biologisch abbaubaren Verpackungsmaterials, die Folgendes umfasst:
einen Extruder zum Bilden eines aufgeschäumten Stärkestabs (28); und
Mittel (12) hinter dem Extruder zum Binden eines Stabs (28) an einen anderen Stab (28), wobei das genannte Bindemittel einen Applikator (10) zum Aufbringen eines Bindeagens auf wenigstens eine Oberfläche der genannten Stäbe (10) beinhaltet, **dadurch gekennzeichnet, dass** die Vorrichtung ferner Folgendes umfasst:
eine erhitzte Düse (6) vor dem genannten Bindemittel zum Verändern des Querschnitts des Stabes (28); und
Mittel (2,4) zum Führen des Stabs durch die Düse (6).

20. Vorrichtung nach Anspruch 19, die Folgendes umfasst:
wenigstens einen Extruder zum Bilden einer Mehrzahl aufgeschäumter Stärkestäbe (28);
Mittel (12) hinter dem Extruder zum Binden eines Stabs (28) an einen anderen Stab (28), wobei das genannte Bindemittel einen Applikator (10) zum Aufbringen eines Bindeagens auf wenigstens eine Oberfläche der genannten Stäbe (10) beinhaltet,
eine erhitzte Düse (6) vor dem genannten Bindemittel zum Verändern der Stäbe (28); und
Mittel zum Führen der Mehrzahl von Stäben (28) durch die Düse (6).

21. Vorrichtung nach Anspruch 19 oder 20, wobei der Applikator (10) ein Sprühdüsensystem, ein poröses Medium unter Ausnutzung von Kapillarsaugwirkung, ein Tintenstrahldrucksystem oder eine oder mehrere Rollen umfasst.

22. Vorrichtung nach einem der Ansprüche 19, 20 oder 21, die ferner eine Stapeleinheit (26) umfasst, um Lagen verbundener Stäbe (28) zur Bildung eines Mehrlagenprodukts miteinander zu laminieren.

## Revendications

1. Méthode de fabrication d'une matière biodégradable destinée à l'emballage, comprenant :
(a) former une baguette en amidon expansé (28) par extrusion; et
(b) lier une baguette extrudée (28) à au moins une autre telle baguette (28), **caractérisée par**
(c) préalablement à l'étape de liaison, faire passer la baguette extrudée (28) à travers une matrice chauffée (6) pour modifier la section transversale de la baguette (28).

2. Méthode selon la revendication 1, comprenant en plus appliquer un liant à une surface au moins de ladite baguette (28) préalablement à l'étape (b).

3. Méthode selon la revendication 2, dans laquelle le liant est un liquide.

4. Méthode selon la revendication 2 ou 3, dans laquelle le liant est de l'eau.

5. Méthode selon la revendication 2, 3 ou 4, dans laquelle le liant est appliqué en utilisant un système à tuyère de pulvérisation, un milieu poreux utilisant l'aspiration capillaire, un système d'impression à jet d'encre ou un ou plusieurs rouleaux.

6. Méthode selon l'une quelconque des revendications précédentes, dans laquelle la forme de la section transversale de la baguette (28) est modifiée à l'étape (c).

7. Méthode selon l'une quelconque des revendications précédentes, dans laquelle la surface de la baguette (28) est modifiée à l'étape (c).

8. Méthode selon l'une quelconque des revendications précédentes, comprenant :
(a) former une pluralité de baguettes en amidon expansé (28) par extrusion;
(b) lier une baguette extrudée (28) à au moins une autre telle baguette (28); et
(c) préalablement à l'étape de liaison, faire passer les baguettes extrudées à travers une matrice chauffée (6) pour modifier la section transversale des baguettes (28).

9. Méthode selon la revendication précédente, dans laquelle à l'étape (b) une pluralité de baguettes (28) sont liées les unes aux autres pour former un ensemble plat (30).

10. Méthode selon la revendication 9, comprenant en outre mettre en forme et/ou appliquer un motif à la surface de l'ensemble (30).

11. Méthode selon la revendication 10, dans laquelle l'ensemble (30) est mis en forme et/ou le motif est appliqué en utilisant un rouleau chauffé (16).

12. Méthode selon la revendication 9, 10 ou 11, comprenant en outre :
(d) couper des ensembles (30) de baguettes pour former des planches (32);
(e) lier au moins deux planches ensemble pour former un bloc multicouche.

13. Méthode selon la revendication 12, comprenant en outre appliquer un liant à une surface au moins desdites planches préalablement à l'étape (e).

14. Méthode selon la revendication 12 ou 13, dans laquelle l'étape (d) comprend lier deux ensembles (30) coupés ou plus pour former la planche (32).

15. Méthode selon la revendication 14, comprenant en outre appliquer un liant à une surface au moins des ensembles (30) coupés préalablement à la formation de la planche (32).

16. Méthode selon l'une quelconque des revendications précédentes, dans laquelle la matrice (6) est chauffée à une température d'entre 80°C et 350°C.

17. Méthode selon l'une quelconque des revendications précédentes, dans laquelle la baguette ou chaque baguette (28) est passée à travers la matrice (6) à une vitesse de 10 ms⁻¹ ou moins.

18. Méthode selon l'une quelconque des revendications précédentes, dans laquelle la baguette ou chaque baguette (28) est passée à travers la matrice (6) à une vitesse de 6 ms⁻¹ ou moins.

19. Appareil de fabrication d'une matière biodégradable destinée à l'emballage, comprenant :
une extrudeuse pour former une baguette en amidon expansé (28); et
un moyen (12) en aval de l'extrudeuse pour lier une baguette (28) à une autre baguette (28), ledit moyen de liaison incluant un applicateur (10) pour appliquer un liant à une surface au moins desdites baguettes (28), **caractérisé en ce que** l'appareil comprend en outre :
une matrice chauffée (6) en amont dudit moyen de liaison pour modifier la section transversale de la baguette (28); et
des moyens (2, 4) pour entraîner la baguette à travers la matrice (6).

20. Appareil selon la revendication 19, comprenant :
au moins une extrudeuse pour former une pluralité de baguettes en amidon expansé (28);
un moyen (12) en aval de l'extrudeuse pour lier une baguette (28) à une autre baguette (28), ledit moyen de liaison incluant un applicateur (10) pour appliquer un liant à une surface au moins desdites baguettes (28);
une matrice chauffée (6) en amont dudit moyen de liaison pour modifier les baguettes (28); et
des moyens pour entraîner la pluralité de baguettes (28) à travers la matrice (6).

21. Appareil selon la revendication 19 ou 20, dans lequel l'applicateur (10) comprend un système à tuyère de pulvérisation, un milieu poreux utilisant l'aspiration capillaire, un système d'impression à jet d'encre ou un ou plusieurs rouleaux.

22. Appareil selon l'une quelconque des revendications 19, 20 ou 21, comprenant en outre une unité d'empilage (26) pour contrecoller des couches de baguettes liées (28) les unes aux autres pour former un produit multicouche.
